# EUROPÄISCHE PATENTSCHRIFT

(11) **EP 0 816 195 B1**
(45) Veröffentlichungstag und Bekanntmachung des Hinweises auf die Patenterteilung: **31.10.2001**
(21) Anmeldenummer: 97106702.0
(22) Anmeldetag: 23.04.1997
(51) Int. Cl.: B60T 7/12

(54) **Verfahren zum Betreiben einer fremdkraftgespeisten Bremsanlage von Nutzfahrzeugen**
Method of operating a power assisted brake system of commercial vehicles
Méthode pour la mise en oeuvre d'un système de freinage assisté des véhicules commerciaux

(30) Priorität: 28.06.1996 DE 19625989
(43) Veröffentlichungstag der Anmeldung: 07.01.1998
(73) Patentinhaber: DaimlerChrysler AG, 70567 Stuttgart (DE)
(72) Erfinder: Spiegelberg, Gernot, 67480 Rountzenheim (FR)

(56) Entgegenhaltungen:
- EP-A- 0 251 156
- WO-A-92/04213
- DE-A- 2 911 372
- DE-A- 3 507 330
- FR-A- 2 713 573

## Beschreibung

Die Erfindung betrifft ein Verfahren zum Betreiben einer fremdkraftgespeisten Bremsanlage von Nutzfahrzeugen.

Aus der DE 35 07 330 A1 ist eine hydraulische Bremsanlage bekannt, bei der im Stillstand des Fahrzeugs der bei der Bremsbetätigung durch den Fahrer in den Radbremsen erzeugte Bremsdruck aufrechterhalten wird, wenn ermittelt wird, daß der Fahrer ein Rollen des Fahrzeugs nicht wünscht. Der Stillstand des Fahrzeugs ist somit unabhängig von der weiteren Bremsbetätigung der Betriebsbremse gesichert. Dazu wird bei Fahrzeugen mit Schaltgetriebe die Stellung des Kupplungspedals erfaßt. Dies dient auch dazu einen Anfahrvorgang zu erfassen und dann den Bremsdruck in den Radbremsen abzubauen. Der Bremsdruckabbau kann dabei auch verzögert erfolgen, um ein Zurückrollen des Fahrzeugs beim Anfahren zu verhindern.

Nachteilig ist es dabei, daß insbesondere bei schweren Nutzfahrzeugen im Hängerbetrieb der Bremsdruck in den Radbremsen, der zum Anhalten des Fahrzeugs erzeugt wurde nicht unbedingt ausreicht, ein Wegrollen des Fahrzeugs sicher zu verhindern.

Die WO 92 04213 A zeigt eine hydraulische Bremsanlage zum Halten eines Fahrzeugs am Berg, bei der durch Einschalten der Hydraulikpumpe einer Hilfsdruckquelle der Bremsdruck an der Vorderachse noch erhöht werden kann.

Des weiteren ist aus der DE 29 11 372 C2 ein Verfahren zum Betreiben der Bremsanlage eines Nutzfahrzeugs bekannt, bei dem ein Rollen des Fahrzeugs entgegen der durch den eingelegten Gang bestimmten gewünschten Fahrtrichtung durch Erzeugen von Bremsdruck an wenigstens einer Achse verhindert wird. Diese Vorgehensweise hat einen großen Druckmittelverbrauch zur Folge, da es sein kann, daß in kurzen Abständen mehrmals hintereinander ein leichtes Zurückrollen des Fahrzeugs erfolgt, was jeweils einen Druckaufbau und einen Druckabbau zur Folge hat.

Aufgabe der Erfindung ist es, den bekannten Wegrollverhinderer dahingehend zu verbessern, daß der Druckmittelverbrauch verringert wird. Gleichzeitig soll gewährleistet werden, daß der aufgebrachte Bremsdruck dazu in der Lage ist, das Fahrzeug sicher im Stillstand zu halten.

Diese Aufgabe wird bei einem gattungsgemäßen Verfahren zum Betreiben einer Bremsanlage erfindungsgemäß mit den Merkmalen des Anspruchs 1 gelöst, wobei die Merkmale der Unteransprüche vorteilhafte Aus- und Weiterbildungen kennzeichnen.

Die Bremsdruckerzeugung erfolgt wenigstens achsweise unabhängig voneinander, wobei der an den einzelnen Achsen zu erzeugende Bremsdruck anhand eines Maßes für die Bremsbetätigung des zum Stillstand führenden Bremsvorgangs ermittelt wird. Des weiteren ist der Bremsdruck bei angekoppeltem Anhänger in den Radbremszylindern des Anhängers mittels des Anhängersteuerventils unabhängig von den Bremsdrücken in den Radbremszylindern des Zugfahrzeugs steuerbar. Zur Auslösung der erfindungsgemäßen Steuerung des Bremsdrucks bzw. zum Aufrechterhalten eines Bremsdrucks muß ein Signal, das den Willen des Fahrers, ein Rollen des Fahrzeugs V zu verhindern, repräsentiert, erzeugt werden. Dieses Signal kann beispielsweise direkt durch die Stellung eines Schaltelements erzeugt werden, wodurch der Fahrer durch Bedienen des Schaltelements seinen entsprechenden Willen bekunden kann. Ein entsprechender Wille kann jedoch auch aus Pedalbetätigung und Fahrzustand (z.B. Schaltgetriebe im Leerlauf, Fahrzeug im Stillstand und Dauer Bremsbetätigung größer als ein bestimmter Zeitraum) abgeleitet werden.

Gemäß einer Ausgestaltung der Erfindung geschieht dies dadurch, daß der aufgrund der zum Stillstand führenden Betätigung der Bremse erzeugte Bremsdruck gemessen wird und daß aufgrund dieses gemessenen Bremsdrucks der zur Aufrechterhaltung des Fahrzeugstillstands erforderliche Bremsdruck bestimmt wird.

Eine weitere Ausgestaltung der Erfindung dient dazu, den Anfahrvorgang des Fahrzeugs zu erleichtern. Dies ist insbesondere beim Anfahren am Hang von schweren Nutzfahrzeugen hilfreich. Im Falle des Abbruchs des Anfahrvorgangs wird zunächst der zum Anhalten des Fahrzeugs vom Fahrer eingespeiste Bremsdruck und erst zu einem späteren Zeitpunkt der vorher ermittelte, zur Aufrechterhaltung des Stillstands des Fahrzeugs erforderliche Bremsdruck aufgebracht. Dadurch werden die gerade bei schweren Nutzfahrzeugen entstehenden Schwingungen des Aufbaus bei abgebrochenen Anfahrvorgängen wirksam verhindert. Ein Zurückrollen des Fahrzeugs ist gleichzeitig verhindert.

Zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigen:
- Fig. 1: eine zur Durchführung des Verfahrens geeignete fremdkraftgespeiste Bremsanlage und
- Fig. 2: das Flußdiagramms eines erfindungsgemäßen Verfahrens

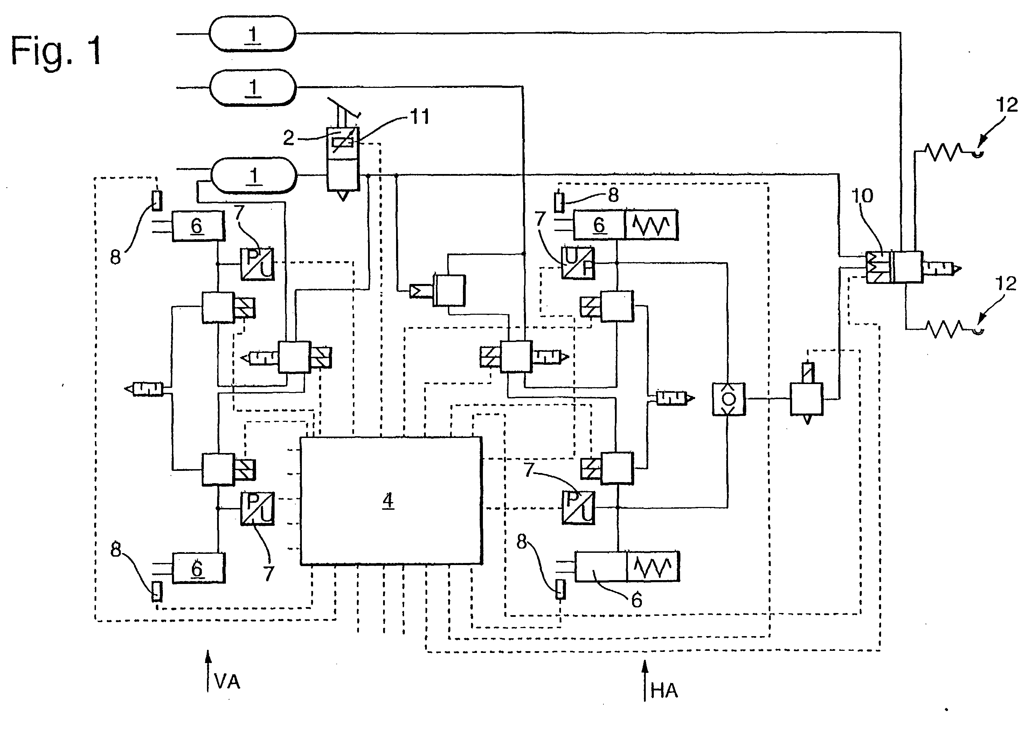

Die Fig. 1 zeigt eine schematische Darstellung einer Bremsanlage, die eine Steuerung des Bremsdrucks in den Bremszylindern 6 der Radbremsen erlaubt. Bei der dargestellten Bremsanlage ist es möglich den Bremsdruck in den einzelnen Bremszylindern 6 zu steuern. Einem Bremszylinder 6 gleichgestellt ist der Bremsdruck am Anhängersteuerventil 10, über das der Bremsdruck in einem eventuell angekuppelten Anhänger gesteuert wird. Die Bremsanlage des Anhängers ist über die Kupplungsköpfe 12 mit der Bremsanlage des Fahrzeugs verbunden. Der in den Radbremszylindern des Anhängers herrschende Bremsdruck wird am Anhängersteuerventil 10 gesteuert. Zur Durchführung der Erfindung würde es jedoch ausreichen, eine achsweise Steuerung des Bremsdrucks vorzunehmen. Die Bremsbetätigung durch den Fahrer erfolgt über das Betriebsbremspedal 2, an dem mittels eines Sensors 11 auch ein der Betätigung des Bremspedals entsprechendes Signal abgegriffen wird und der Steuereinheit 4 zugeführt wird. Die Bremsanlage ist durch eine nicht dargestellte Druckquelle, die beide Druckspeicher 1 versorgt, fremdkraftgespeist. Aus den Signalen der Raddrehzahlsensoren 8 kann in dem Steuergerät 4 unter anderem auch die Fahrzeuggeschwindigkeit abgeleitet werden. Dem Steuergerät 4 werden weitere Signale beispielsweise ein die Stellung des Kupplungspedals (nicht dargestellt) repräsentierendes Signal und das Signal eines Bremslichtschalters zugeführt. Ferner werden dem Steuergerät auch die Signale von den einzelnen Radbremszylindern 6 zugeordneten Drucksensoren 7 zugeführt. Erfolgt die Steuerung des Bremsdrucks achsweise, so genügt die Anordnung jeweils eines Drucksensors 7 an jeder Fahrzeugachse.

Signale von Sensoren, die anderen Steuergeräten zugeführt werden und in diesen in gleicher Weise wie in dem Steuergerät 4 verarbeitet werden, müssen nicht unbedingt direkt dem Steuergerät 4 zugeführt werden. Es ist ausreichend, wenn diese Signale einem Steuergerät zugeführt werden, in diesem entsprechend verarbeitet werden und anschließend anderen Steuergeräten über einen Datenbus zur Verfügung gestellt werden. Auch das Steuergerät 4 kann an einen Datenbus angeschlossen sein. Über diesen Datenbus kann beispielsweise von einer Motorsteuerung die mittels eines Sensors erfaßte Stellung eines Gas- oder Kupplungspedals in Form eines aus dem Sensorsignal ermittelten Pedalwegs an das Steuergerät 4 übermittelt werden.

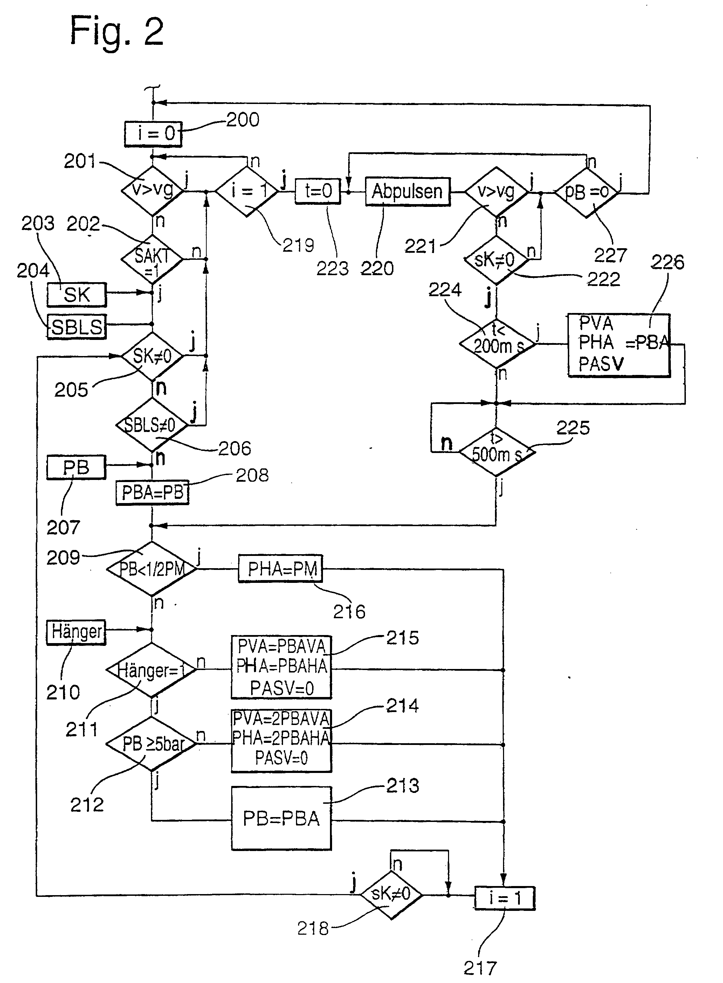

Die Fig. 2 zeigt das Flußdiagramm eines erfindungsgemäßen Verfahrens, wie es an einer Bremsanlage gemäß der Fig. 1 durchgeführt werden kann. Bei den Bezeichnungen für die unterschiedlichen Bremsdrücke wird folgende Systematik verwendet. Der Buchstabe "P" steht für Druck bzw. Bremsdruck. An ihn werden die Bezeichnungen "VA", "HA", "ASV" angefügt, wenn es sich um den aktuellen Bremsdruck in den Bremszylindern der Vorderachse VA, der Hinterachse HA bzw. dem Anhängersteuerventil ASV handelt. Der Buchstabe "B" wird als Sammelbezeichnung für alle drei Werte (Bremsanlage) bzw. für alle erfaßten Werte (ggf. kann auch der Bremsdruck in jedem Radbremszylinder erfaßt werden) verwendet. Der Zusatz "A" wird nach dem "P" oder nach dem "B" verwendet, und steht für Werte, die abgespeichert sind oder werden.

Zunächst wird im Schritt 200 der Zähler i auf Null gesetzt. Der Zähler i zeigt an, ob eine von der Steuerung veranlaßte Einsteuerung von Bremsdruck in Radbremszylinder wenigstens einer Achse stattgefunden hat. Ist er auf Null gesetzt, so wurde noch kein solcher Bremsdruck erzeugt. Im Schritt 201 wird überprüft, ob die Fahrzeuggeschwindigkeit v oberhalb eines Geschwindigkeitsgrenzwertes vg liegt. Liegt die Fahrzeuggeschwindigkeit oberhalb dieses Geschwindigkeitsgrenzwertes vg, der einen Wert beispielsweise zwischen 1,5 und 3 km/h hat, so soll eine Erzeugung eines Bremsdrucks, der das Fahrzeug im Stillstand hält, nicht stattfinden. Daher wird in diesem Fall zum Schritt 219 gesprungen.

Andernfalls ist das Einsteuern eines Bremsdrucks an einzelnen Fahrzeugachsen, um das Fahrzeug im Stillstand zu halten, möglich. Dazu wird zunächst im Schritt 202 überprüft, ob ein Aktivierungsschalter SAKT betätigt wurde. Dieser Schalter ermöglicht es dem Fahrer, die von der Steuerung veranlaßte Einsteuerung eines Bremsdrucks zu verhindern. Wenn dieser Aktivierungsschalter ausgeschaltet ist, so wird zum Schritt 219 gesprungen. Andernfalls wird gemäß den Schritten 203 und 204 jeweils ein aktueller Wert für die Stellung SK des Kupplungspedals und die Stellung SBLS des Bremslichtschalters eingelesen. Im Schritt 205 wird überprüft, ob sich die Kupplung in ihrer geschlossenen, unbetätigten Stellung befindet. Ist dies nicht der Fall, so wird auf einen Anfahrvorgang geschlossen und es wird zum Schritt 219 gesprungen. Andernfalls wird im Schritt 206 überprüft, ob das Bremspedal betätigt ist. Dies wird aus der Schaltstellung des Bremslichtschalters ermittelt. Ist der Bremslichtschalter geschlossen (SBLS≠0), so wird zum Schritt 219 gesprungen, da der Fahrer die Fahrzeugbremse noch betätigt und dadurch selbst den Bremsdruck reguliert. Andernfalls werden gemäß dem Schritt 207 aktuelle Werte des Bremsdrucks PB erfaßt und gemäß Schritt 208 werden diese Werte auch den Anhaltebremsdrücken PBA zugeordnet. Die Anzahl der Bremsdrücke die erfaßt und abgespeichert werden müssen ist davon abhängig, wie die Bremsdruckeinsteuerung erfolgt. Im einfachsten Fall genügt es, lediglich einen Bremsdruckwert zu erfassen und abzuspeichern. Im dargestellten Beispiel wird der Bremsdruck an jeder Achse (VA, HA) des Zugfahrzeugs und am Anhängersteuerventil (ASV) gesteuert. Daher wird für jede Achse (VA, HA) und das Anhängersteuerventil (ASV) ein Wert gespeichert, der nachfolgend mit dem Stamm PBA und dem entsprechenden Zusatz (VA, HA, ASV) bezeichnet. Wird nur der Stamm verwendet, so bezieht sich die Aussage auf alle (hier drei) gespeicherten Werte. Das Ermitteln und Abspeichern dieser Werte geschieht nur einmal, nämlich dann, wenn von der Steuerung noch kein Bremsdruck erzeugt oder aufrechterhalten wurde, um den Stillstand des Fahrzeugs sicherzustellen.

Gemäß dem Schritt 209 wird nunmehr überprüft, ob der Bremsdruck geringer ist als die Hälfte eines festgelegten Minimalbremsdrucks PM. Ist dies der Fall so wird gemäß dem Schritt 216 an der Hinterachse ein Bremsdruck PHA in der Größe des festgelegten Minimalbremsdrucks PM erzeugt. An den anderen Achsen wird kein Bremsdruck eingesteuert.

Andernfalls wird gemäß dem Schritt 210 das Signal eines Sensors eingelesen, der die Präsens eines Hängers an dem Fahrzeug ermittelt. Es kann sich dabei nicht nur um einen mit einer Deichsel angekoppelten Hänger handeln. Als Hänger kann auch der Auflieger eines Sattelzugs angesehen werden. Im Schritt 211 wird dann überprüft, ob ein Hänger angekoppelt ist. Ist dies nicht der Fall, so wird gemäß dem Schritt 215 an der Vorderachse ein Bremsdruck PVA erzeugt bzw. aufrechterhalten, der dem Bremsdruck PBAVA entspricht, der abgespeichert wurde. An der Hinterachse wird ebenfalls ein Bremsdruck PHA aufrechterhalten, der dem abgespeicherten Bremsdruck PBAHA entspricht. An dem Anhängersteuerventil ASV wird kein Bremsdruck aufrechterhalten oder erzeugt.

Andernfalls wird gemäß dem Schritt 212 überprüft, ob der Bremsdruck PB größer ist als ein fest vorgegebener Wert von beispielsweise 5 bar. Ist dies nicht der Fall so wird gemäß dem Schritt 214 an der Vorderachse VA und an der Hinterachse HA ein Bremsdruck PVA bzw. PHA erzeugt, der dem zweifachen Wert des Abgespeicherten Bremsdrucks PBAVA bzw. PBAHA entspricht. An dem Anhängersteuerventil ASV wird kein Bremsdruck PASV aufrechterhalten, der Hänger ist drucklos. Dies hat den Vorteil, daß die Last des Hängers schon vor Beginn eines Anfahrvorgangs an dem Zugfahrzeug angreift und daher Aufbauschwingungen beim Anfahrvorgang entgegengewirkt wird.

Ansonsten wird gemäß dem Schritt 213 in der gesamten Bremsanlage ein Bremsdruck PB aufrechterhalten, der dem abgespeicherten Bremsdruck PBA entspricht. Die Vorgabe PB=PBA kann durchaus individuelle Druckvorgaben für die beiden Achsen und das Anhängersteuerventil beinhalten, weil unterschiedliche Werte für den Bremsdruck jedes dieser Elemente abgespeichert wurden.

Vom den Schritten 213 bis 216 wird nach dem Einsteuern des entsprechenden Bremsdrucks zum Schritt 217 übergegangen. Gemäß diesem Schritt wird der Zähler i auf "1" gesetzt, da ein Einsteuern bzw. Aufrechterhalten des Bremsdrucks stattfindet. Gemäß dem Schritt 218 wird anschließend solange eine Warteschleife durchgeführt, bis eine Betätigung der Kupplung durch den entsprechenden Sensor festgestellt wird. Die Betätigung der Kupplung bei stillstehendem Fahrzeug wird als Einleitung eines Anfahrvorgangs durch den Fahrer interpretiert. In dieser Zeit ist die Bremsdrucksteuerung aktiv. Wird die Kupplung betätigt, so wird zum Schritt 205 gesprungen.

Gemäß dem Schritt 219 wird überprüft, ob der Zähler i auf 1 gesetzt wurde. Ist dies nicht der Fall, so wird zum Schritt 201 zurückgesprungen. Andernfalls wird darauf geschlossen, daß nun ein Bremsdruck aufrechterhalten oder erzeugt wurde und daß ein Anfahrvorgang vorliegt. Daher wird gemäß dem Schritt 223 zunächst der Zeitzähler t auf Null zurückgesetzt und anschließend gemäß dem Schritt 220 der Bremsdruck um ein bestimmtes Maß abgepulst. Anschließend wird im Schritt 221 überprüft, ob die Fahrzeuggeschwindigkeit den Grenzwert vg überschritten hat. Ist dies der Fall, so wird gemäß dem Schritt 227 überprüft, ob der Bremsdruck PB schon auf Null zurückgeführt wurde. Ist dies auch nicht der Fall, so wird zum Schritt 220 zurückgesprungen, andernfalls wird zum Schritt 200 zurückgesprungen.

Wurde im Schritt 221 festgestellt, daß die Fahrzeuggeschwindigkeit v den Grenzwert vg noch nicht überschritten hat, so wird im Schritt 222 geprüft, ob das Kupplungspedal betätigt ist. Ist dies nicht der Fall, so wird zum Schritt 227 gesprungen, andernfalls wird gemäß dem Schritt 224 überprüft, ob seit dem Zurücksetzen des Zeitzählers schon mehr als 200 ms verstrichen sind. Ist dies nicht der Fall, so wird gemäß dem Schritt 226 der Bremsdruck PBA erzeugt und aufrechterhalten, der bei der zum Stillstand führenden Bremsung gemessen und abgespeichert wurde. Es wird zum Schritt 225 gesprungen, zu dem auch gesprungen wird, wenn im Schritt 224 ermittelt wird, daß schon mehr als 200 ms seit dem Zurücksetzen des Zeitzählers vergangen sind. Das Zurücksetzen des Zeitzählers markiert den Beginn der Schritte, die zur Beendigung der Funktion des Wegrollverhinderers durchgeführt werden. Das Intervall von 200 ms kann auch einen anderen, angemessenen Wert annehmen. Es ist dies ein sehr kurzer Zeitraum, der danach zu bemessen ist, wie lange davon ausgegangen werden kann, daß eine Bremsung mit den vorher abgespeicherten Bremsdrücken noch sicher zum Stillstand des Fahrzeugs führt. Auch das nachfolgend genannte Intervall von 500 ms kann an die Gegebenheiten des Fahrzeugs angepaßt werden. Es ist das Zeitintervall, innerhalb dessen es als sinnvoll erachtet wird, den Bremsdruck wieder zu erzeugen, der zum Aufrechterhalten des Stillstands des Fahrzeugs vorher aufgebracht wurde.

Gemäß dem Schritt 225 wird in einer Warteschleife überprüft, ob ein Zeitintervall von 500 ms überschritten wurde. Sobald dies der Fall ist, wird zum Schritt 209 gesprungen. Ansonsten wird zum Schritt 225 zurückgesprungen.

## Patentansprüche

1. Verfahren zum Betreiben einer fremdkraftgespeisten Bremsanlage von Nutzfahrzeugen, wobei ein die Fahrzeuggeschwindigkeit, ein die Schaltstellung des Kupplungspedals und ein den Willen des Fahrers ein Rollen des Fahrzeugs zu verhindern repräsentierendes Signal erfaßt und einem Steuergerät (4) zugeführt werden, mittels dem Schaltventile derart ansteuerbar sind, daß unabhängig von einer entsprechenden Betätigung des Bremspedals (2) in den Radbremszylindern (6) des Zugfahrzeugs Bremsdrücke (PBVA, PBHA) achsweise unabhängig voneinander einsteuerbar sind und daß mittels eines ansteuerbaren Anhängersteuerventils (10) bei angekoppeltem Anhänger ein Bremsdruck (PASV) in den Radbremszylindern des Anhängers unabhängig von den Bremsdrücken in den Radbremszylindern (6) des Zugfahrzeugs einsteuerbar ist, wobei der an den einzelnen Achsen einzusteuernde Bremsdruck (PBVA, PBHA) anhand eines Maßes für die Bremsbetätigung des zum Stillstand führenden Bremsvorgangs ermittelt wird.

2. Verfahren nach Anspruch 1,
**dadurch gekennzeichnet,**
**daß** wenigstens ein Schwellenwert (PM) für das Maß der Bremsbetätigung vorgegeben ist, wobei den durch den wenigstens einen Schwellenwert (PM) gebildeten Bereichen einzusteuernde Bremsdruckwerte für die einzelnen Fahrzeugachsen zugeordnet sind.

3. Verfahren nach Anspruch 2,
**dadurch gekennzeichnet,**
**daß** den Bereichen, die einem größeren Maß der Bremsbetätigung entsprechen, größere Werte des einzusteuernden Bremsdrucks zugeordnet sind.

4. Verfahren nach Anspruch 1,
**dadurch gekennzeichnet,**
**daß** der einzusteuernde Bremsdruck (PB) eine monoton steigende Funktion des Maßes der Bremsbetätigung des zum Stillstand führenden Bremsvorgangs ist.

5. Verfahren nach Anspruch 1,
**dadurch gekennzeichnet,**
**daß** mittels den dem Steuergerät (4) zugeführten Signalen ein Anfahrvorgang des Fahrzeugs erkannt wird und daß während des Anfahrvorgangs der eingesteuerte Bremsdruck (PB) progressiv abgebaut wird (220).

6. Verfahren nach Anspruch 5,
**dadurch gekennzeichnet,**
**daß** während eines erkannten Anfahrvorgangs die dem Steuergerät (4) zugeführten Signale dahingehend überwacht werden, ob ein Abbruch des Anfahrvorgangs vorliegt und daß dann, wenn ein Abbruch des Anfahrvorgangs festgestellt wird (Verzweigung j aus 222) unabhängig von der Betätigung des Bremspedals ein Bremsdruck (PB) in Radbremszylindern erzeugt wird.

7. Verfahren nach Anspruch 6,
**dadurch gekennzeichnet,**
**daß** der nach dem Erkennen des Abbruchs des Anfahrvorgangs (Verzweigung j aus 222) erzeugte Bremsdruck (PB) dem Bremsdruck entspricht, der bei der Bremsbetätigung des zum Stillstand führenden Bremsvorgangs erzeugt wurde (PBA).

8. Verfahren nach Anspruch 7,
**dadurch gekennzeichnet,**
**daß** der zu erzeugende Bremsdruck innerhalb eines vorgegebenen Druckaufbauintervalls erzeugt wird.

9. Verfahren nach Anspruch 7,
**dadurch gekennzeichnet,**
**daß** nach dem Abbruch des Anfahrvorgangs (Verzweigung j aus 222) und dann, wenn seit Beginn des Anfahrvorgangs eine vorgegebene Zeitdauer überschritten wurde (Verzweigung j aus 225), erneut der Bremsdruck erzeugt wird, der aus dem Maß der Bremsbetätigung des zum Stillstand führenden Bremsvorgangs ermittelt wurde (209 ff.).

## Claims

1. Method of operating an independently powered brake system of utility vehicles, in which a signal representing the vehicle speed and a signal representing the switch position of the clutch pedal and a signal representing the wish of the driver to prevent the vehicle from moving are detected and forwarded to a control unit (4), as a result of which on/off valves can be actuated so that, irrespective of the brake pedal (2) being duly operated, brake pressures (PBVA, PBHA) are applied to the wheel brake cylinders (6) of the towing vehicle separately from one another axle by axle and, if a trailer is attached, a brake pressure (PASV) can be applied to the wheel brake cylinders of the trailer irrespective of the brake pressures in the wheel brake cylinders (6) of the towing vehicle, the brake pressure (PBVA, PBHA) applied to the individual axles being determined on the basis of a measurement for the brake operation of the braking procedure used to bring about a halt.

2. Method as claimed in claim 1,
**characterised in that**
at least one threshold value (PM) is predetermined as a measure of the braking operation, brake pressure values to be applied for the individual vehicle axles being assigned to the ranges formed by the at least one threshold value (PM).

3. Method as claimed in claim 2,
**characterised in that**
higher values of the brake pressure to be applied are assigned to the ranges corresponding to a greater degree of brake operation.

4. Method as claimed in claim 1,
**characterised in that**
the brake pressure (PB) to be applied is a monotonously increasing function of the measure of the degree to which the brake is operated in the braking procedure used to bring about a halt.

5. Method as claimed in claim 1,
**characterised in that**
a start-up procedure of the vehicle is detected from the signals applied to the control unit (4) and the brake pressure (PB) applied during the start-up procedure is progressively decreased (220).

6. Method as claimed in claim 5,
**characterised in that**
during a detected start-up procedure, the signals applied to the control unit (4) are continuously monitored to ascertain whether the start-up procedure has been interrupted and if it is established that the start-up procedure has been interrupted (branch j from 222), a brake pressure (PB) is generated in wheel brake cylinders irrespective of the fact that the brake pedal is being operated.

7. Method as claimed in claim 6,
**characterised in that**
the brake pressure (PB) generated after detecting that the start-up procedure has been interrupted (branch j from 222) corresponds to the brake pressure which was generated (PBA) when the brake was operated during the braking procedure which brought about a halt.

8. Method as claimed in claim 7,
**characterised in that**
the brake pressure to be generated is generated within a predetermined period of pressure build-up.

9. Method as claimed in claim 7,
**characterised in that**
after the start-up procedure is interrupted (branch j from 222), if a predetermined period was exceeded from the beginning of the start-up procedure (branch j from 225), the brake pressure which was detected by measuring the brake operation of the braking procedure which led to standstill is generated again (209 onwards).

## Revendications

1. Procédé pour commander un système de freinage par application d'une source de force externe, dans un véhicule utilitaire, où on saisit un signal représentant la vitesse du véhicule, la position de la pédale d'embrayage et la volonté du conducteur d'empêcher que le véhicule ne roule et où ce signal est dirigé sur un appareil de commande (4), par lequel sont adressés des soupapes commutateurs de manière à ce que - indépendamment d'une commande correspondante par la pédale de freinage (2) - les pressions de freinage (PBVA, PBHA) dans les cylindres (6) de freinage des roues du tracteur, au niveau des différents essieux puissent être commandées de manière mutuellement indépendante et que, grâce à une soupape de commande (10) pour la remorque - lorsqu'une remorque est couplée - une pression de freinage (PASV) dans le cylindre de freinage de la remorque puisse être commandée indépendamment de la pression de freinage dans le cylindre de freinage des roues (6) du véhicule tracteur, la pression de freinage (PBVA, PBHA) à commander sur les essieux individuels, étant obtenue au moyen d'une valeur de référence pour la commande des freins dans une opération de freinage amenant le véhicule à l'arrêt.

2. Procédé selon la revendication 1, **caractérisé en ce qu'**au moins une valeur de seuil (PM) est prévue pour la valeur de référence de la commande de freinage et **en ce qu'**aux domaines de valeurs de pression de freinage de commande sont attribuées des valeurs de pression de freinage à communiquer aux essieux individuels.

3. Procédé selon la revendication 2, **caractérisé en ce qu'**aux domaines qui correspondent à une valeur plus importante de commande de freinage, on attribue des valeurs plus élevées des pressions de freinage à communiquer.

4. Procédé selon la revendication 1, **caractérisé en ce que** la pression de freinage à communiquer (PB) est une grandeur qui est une fonction monotone croissante de la valeur de la commande de freinage aboutissant à l'arrêt du véhicule dans le processus de freinage.

5. Procédé selon la revendication 1, **caractérisé en ce que** l'on détermine par des signaux communiqués à l'appareil de commande (4) un démarrage du véhicule et **en ce que** pendant le démarrage, la pression de freinage (PB) est diminuée progressivement (220).

6. Procédé selon la revendication 5, **caractérisé en ce que** pendant un processus de démarrage reconnu, on surveille les signaux dirigés sur l'appareil de commande (4) pour déterminer si une interruption du démarrage a eu lieu et lorsqu'une interruption du processus de démarrage a lieu (branche j de 222) une pression (PB) dans le cylindre de freinage des roues est produite, indépendamment de la commande de la pédale de freinage.

7. Procédé selon la revendication 6, **caractérisé en ce que** la pression de freinage (PB), produite après la mise en évidence d'une interruption du processus de démarrage (branche j de 222), correspond à la pression de freinage (PBA) qui est produite lors de la commande de freinage du processus de freinage aboutissant à un arrêt.

8. Procédé selon la revendication 7, **caractérisé en ce que** la pression de freinage à produire est produite à l'intérieur d'un intervalle prédéterminé de montée en pression.

9. Procédé selon la revendication 7, **caractérisé en ce qu'**après l'interruption du processus de démarrage (branche j de 222) et lorsque depuis le commencement du processus de démarrage, une certaine durée de temps est dépassée (branche j de 225), une pression de freinage est produite à nouveau qui découle de la valeur de la commande de freinage du processus de freinage menant à l'arrêt du véhicule (209).
